Europäisches Patentamt

European Patent Office

Office européen des brevets

(11) Publication number: **0 405 794 A2**

# EUROPEAN PATENT APPLICATION

(21) Application number: **90306487.1**

(22) Date of filing: **14.06.90**

(51) Int. Cl.⁵: **A01D 34/42**

(30) Priority: **22.06.89 GB 8914322**

(43) Date of publication of application:
**02.01.91 Bulletin 91/01**

(84) Designated Contracting States:
**BE DE DK ES FR GB IT NL SE**

(71) Applicant: **ELECTROLUX NORTHERN LIMITED**
**Preston Road Aycliffe Industrial Estate**
**Newton Aycliffe Co. Durham, DL5 6UP(GB)**

(72) Inventor: **Dunn, Kenneth**
**70 Fulthorpe Avenue**
**Mowden Park, Darlington(GB)**

(74) Representative: **Arthur, Bryan Edward et al**
**Withers & Rogers 4 Dyer's Buildings**
**Holbornorn**
**London EC1N 2JT(GB)**

(54) Cylinder mower removable cutter assembly.

㉗ An electrically driven or petrol cylinder mower comprises a mower body 101 within which is mounted a removable cutter assembly 202. The cutting cylinder is driven from an electric motor or petrol engine within the mower body by a drive wheel 504, and is adjustable relative to the body by means of a toothed segment 601 engaging wheels coupled to an adjusting knob 403. The cutter assembly may be removed and replaced by other implements.

FIG.6.

## CYLINDER MOWER REMOVABLE CUTTER ASSEMBLY

The present invention relates to cylinder mowers.

In a lawn mower the distance between the cutters and the ground should ideally be adjustable, so that a user can vary the cutting height according to the season and the condition of the grass. It is also necessary for maintenance, that the clearance between the cutting cylinder and the fixed blade should be capable of adjustment. Further, the cutting cylinder and fixed blade may require to be re-ground from time to time, and this usually involves substantial dismantling of the mower, which is inconvenient, time consuming and, consequently, expensive.

In the present invention, which is defined in the appended claims, adjustment and maintenance are facilitated by incorporating the cutters into a removable cutter assembly which is adjustable for height in relation to the body. Furthermore, the cutter assembly, when removed, can be replaced by another choice, for example, a fertilizer distributor, scarifier, lawn raker or leaf sweeper, making the lawn mower into a versatile garden implement.

A lawn mower according to the invention will now be described with reference to the accompanying drawings, in which:-

Figure 1 is an overall perspective view of the mower;

Figure 2 is a top view of the mower body with the grass box removed;

Figure 3 shows the underside of the grass box;

Figure 4 shows the underside of the mower body, the cutter assembly having been removed;

Figure 5 is a view of the cutter assembly; and

Figure 6 is a detail of a corner of the mower body and one end of the cutter assembly showing the means of adjusting the cutting height;

Figure 7 shows diagrammatically the transmission means for supplying power to the cutting cylinder, and

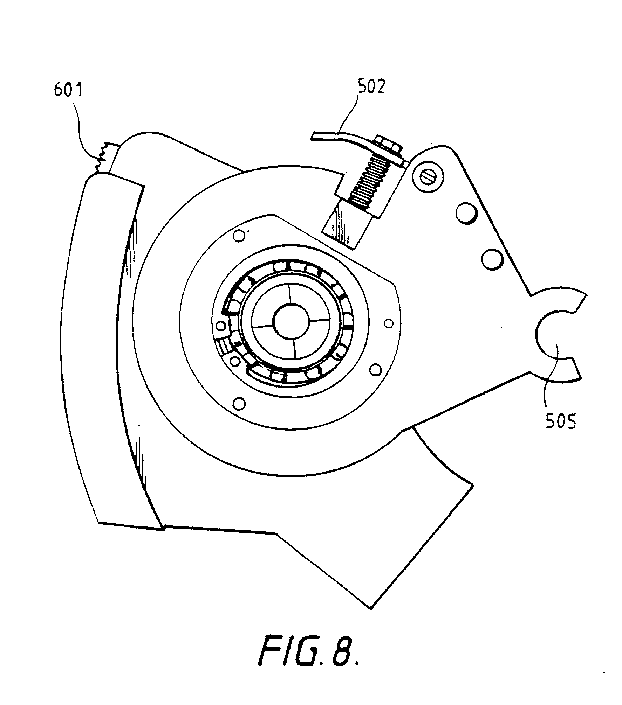

Figure 8, as an end view of the cutter assembling Figure 6.

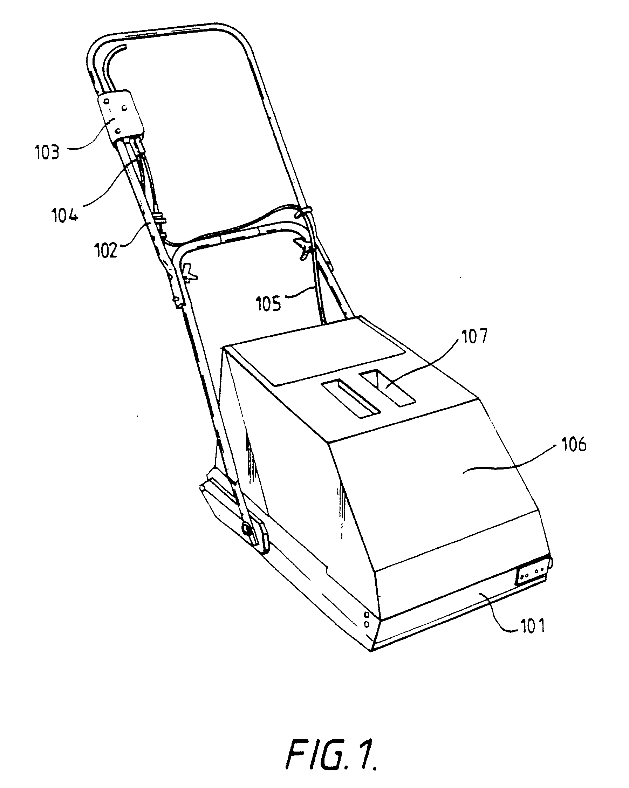

Figure 1 is a general view of the mower with the grass box in position. The mower comprises a body 101 with a fold-down handle 102 provided with a switch 103 having an operating handle, and from which extend leads 104 for connection to an electric supply, and 105 for supplying current to the motor which drives the cutter cylinder.

A grass box 106 fits on top of the mower body and is provided with a handle 107 so tht it can easily be lifted off for emptying or for access to the top of the mower body.

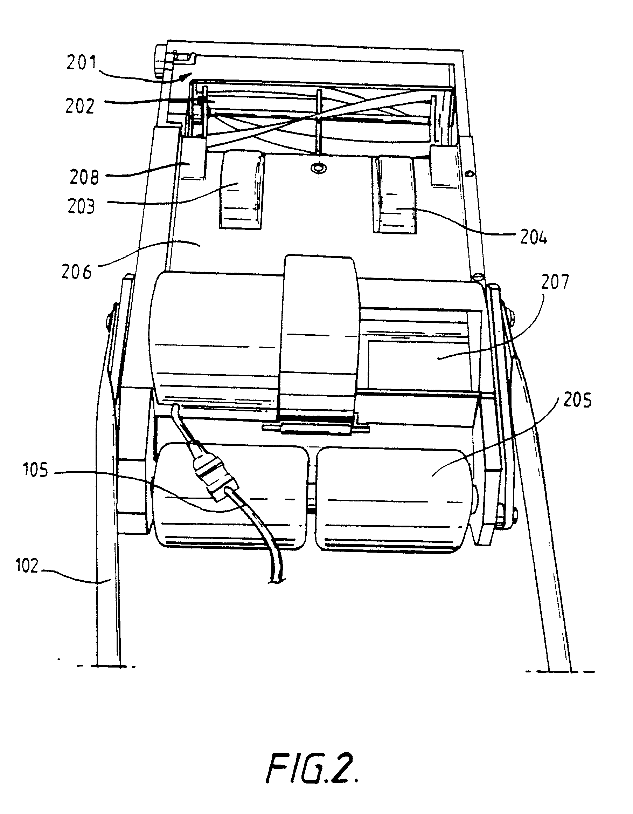

Figure 2 is a view of the mower body from the top, seen from the operator's position, the grass box having been removed.

The body of generally rectangular outline, and at the front is a rectangular aperture 201 within which is fitted a cutter assembly 202. The cutter assembly is a separate unit which is removable, and which, when in position, can be adjusted with respect to the body to vary the cutting height. The cutter has a drive wheel which couples with a drive mechanism when the cutter assembly is in place in a manner which will be described more fully below.

The mower body is supported from the ground partly by a pair of land wheels 203,204 and partly by a split rear roller 205. The land wheels 203,204 are placed behind the cutter assembly and are inset so as to be within the width of the cutters, with the result that they run only on the cut surface of the grass, and do not flatten grass which has not yet been mown. The land wheels are shown on fixed axles, but they may be mounted as casters for ease of manoeuvering, or may be replaced by one or more rollers.

Between the wheels 203,204 and the rear roller 205 is a housing 206, a cover of which is hinged to give access for cleaning and maintenance. The power lead 105 supplies power to a motor within this housing and which is not visible in the Figure, the shaft of which carries at its outer end a grooved drive pulley and at its inner end a turbo fan. The opposite side of the housing has an opening 207 which mates with a corresponding opening in the underside of the grass box when this is placed in position. This opening provides an air inlet for the turbo fan, so that the fan in operation draws air through the grass box. A further housing, 208 accommodates the drive belt which couples the drive pulley to the cutting cylinder.

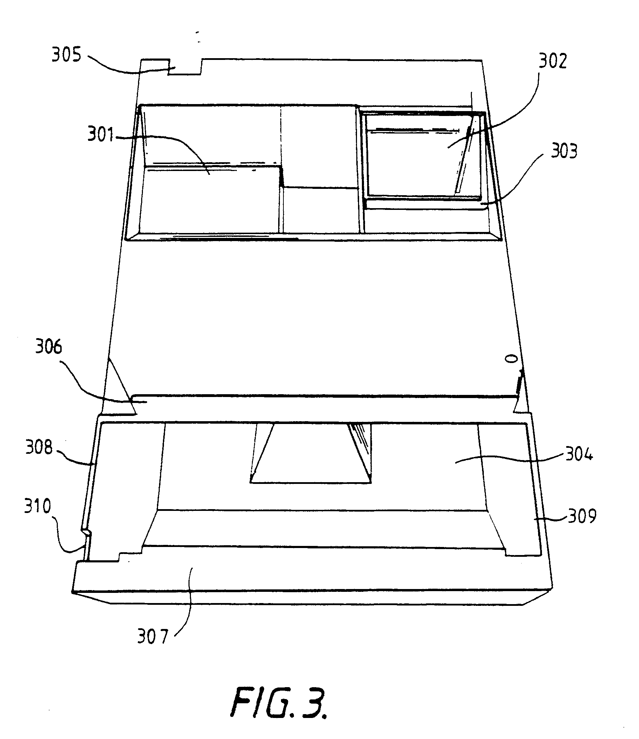

Figure 3 is a view of the grass box from the underside. It has a lower surface with a recess 301, conforming in shape to the housing 206, and an opening 302 which mates with the opening 207 in the housing 206. A gasket of foam plastic material 303 round this opening seals it against the entry of outside air, and a duct within the grass box extends towards the top, so that air is drawn from above the level of the cuttings in the grass box, and grass is not drawn through in quantities sufficient to clog the turbo fan. For the same purpose a filter grid (not shown in the drawing) may be fitted loosely in the aperture 302.

The front end of the grass box is formed with a mouth 304, fitting over the top of the aperture 201 in the mower body which houses the cutter assembly, and which in operation allows air and grass cuttings to be drawn into the grass box by the suction created by the turbo fan. A notch 305 allows for the passage of the motor supply lead 105 from the switch on the handle.

Projecting flanges 306,307 assist in sealing the junction of the grass box mouth with the top of the cutter assembly aperture, and also locate the front end of the grass box with respect to the body. The rear portion of the grass box is located against the ends of the housing 206 by the end walls 308,309 of the recess 301.

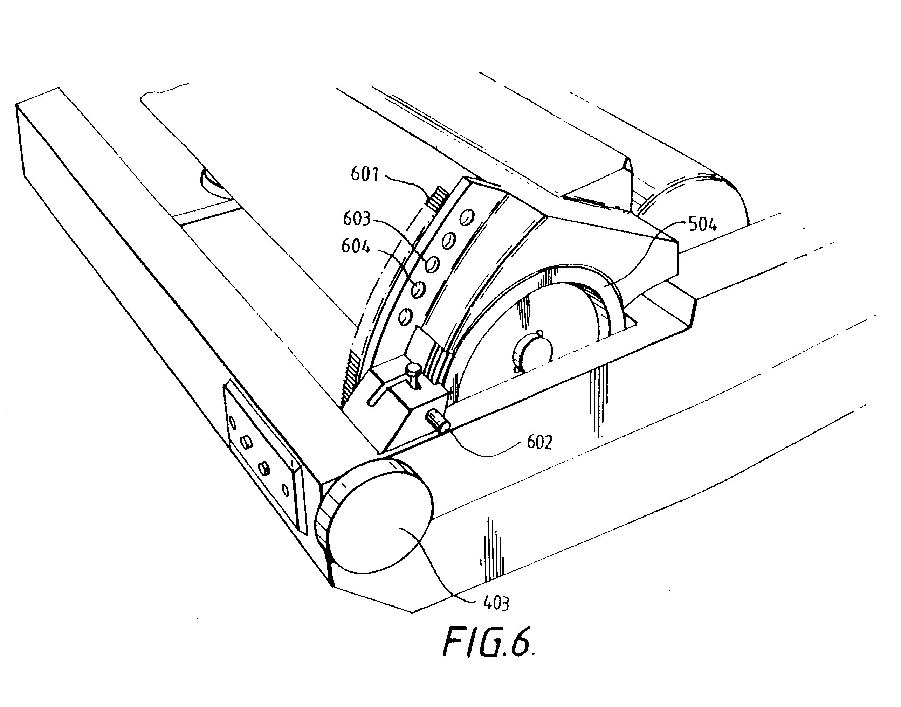

A cut-out 310 at the corner of the mouth accommodates a locking device for the cutting height adjustment which will be described in more detail with reference to Figure 6.

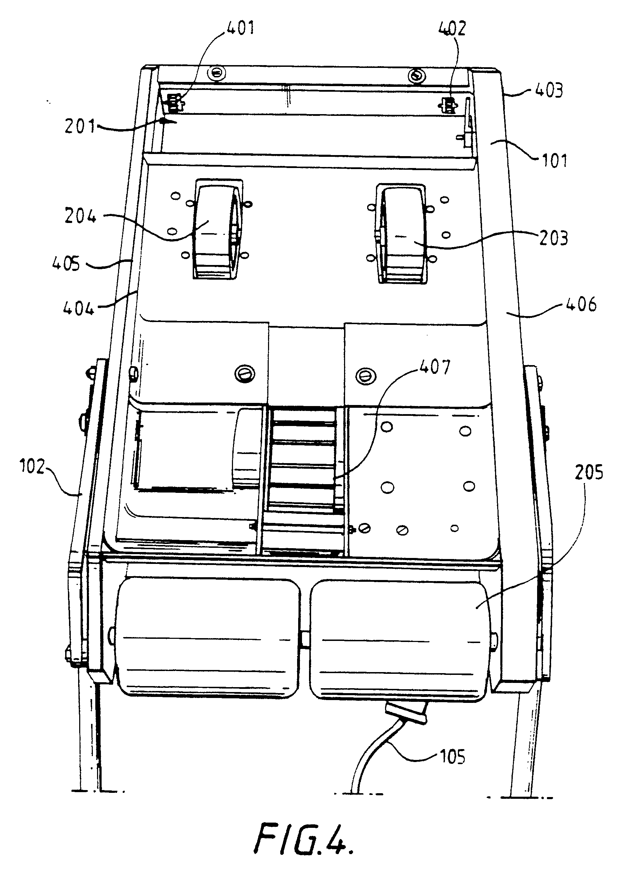

Figure 4 shows the underside of the mower body with the cutter assembly removed. This view shows the land wheels 203,204, the rear roller 205, and the cutter assembly aperture 201. Within the aperture 201 is a pair of toothed wheels 401,402 which, as will be explained below, engage toothed segments on the cutter assembly, enabling its position to be adjusted, and so the height of cut to be varied. These toothed wheels are mounted on a shaft rotatable by an adjusting knob 403.

The major part of the mower body underside between the rear roller 205 and the aperture 201 is enclosed by a skirt 404, comprising a strip running along the insides of the side members 405,406 of the body, and across its width in front of the rear rollers and behind the cutter assembly aperture. This skirt extends down almost to ground level.

The turbo fan 407 exhausts the air which it has drawn through the grass box into the space within this skirt, and in operation the raised pressure within the skirt assists in supporting the mower above the ground, reducing the load on the land wheels and rear roller, and so making the mower easier to manoeuvre. In this connection, attention is drawn to our pending Patent Application No. 89.14325.9

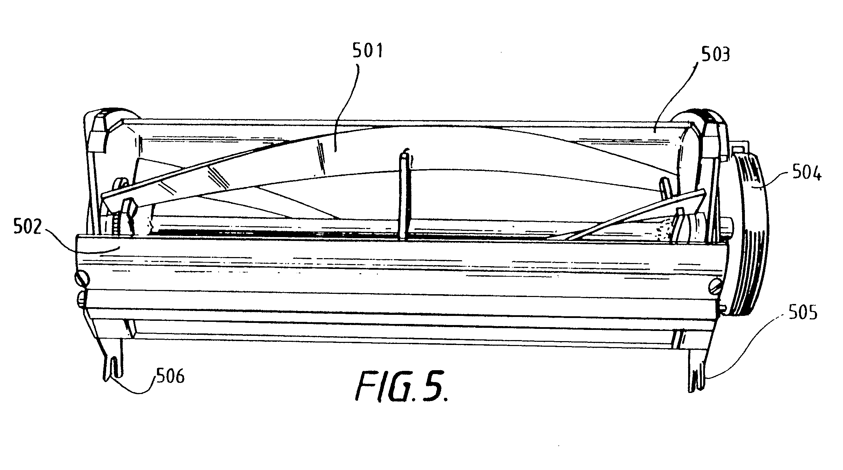

Figure 5 is a view of the cutter assembly seen from the underside. The assembly consists of a cutting cylinder 501 having helical blades of conventional form, and a fixed blade 502. A shield 503 limits the ingress of air from the side of the cutter and helps direct the grass upwards into the mouth of the grass box. The cylinder shaft carries a drive wheel 504 in the form of a ribbed pulley which engages a poly-V drive belt, as will be explained below.

A pair of forked projections 505,506 extend from the points near the ends of the cutter assembly and bear, when the assembly is in position, against pins or rods within the cutter assembly aperture, allowing the assembly to have some rotational movement about these pins or rods for height adjustment.

Figure 6 is a fragmentary view of the mower, showing the cutter assembly located in its aperture, but raised considerably above its normal operating position so as to show details of the height adjustment more clearly.

The drive pulley 504 engages a drive belt passing over a pulley within the body, as will be explained below, and the forks 505, 506 bear against the axle of this pulley or against pins lying along its axis. The cutter assembly is supported between these forks and the toothed wheels 401,402, which engage toothed segments, one of which, 601, is visible in the Figure. The toothed wheels are rotated by means of the adjusting knob 403 to raise or lower the cutter assembly, and this adjustment causes the cutter assembly to pivot about the pins coaxial with the pulley on which the drive belt runs so that the drive pulley 504 always remains in engagement with this belt throughout the adjustment.

A locking bolt 602 on the mower body may be engaged in any one of a series of holes 603,604 etc on the toothed segments 601 to lock it in the desired operating position.

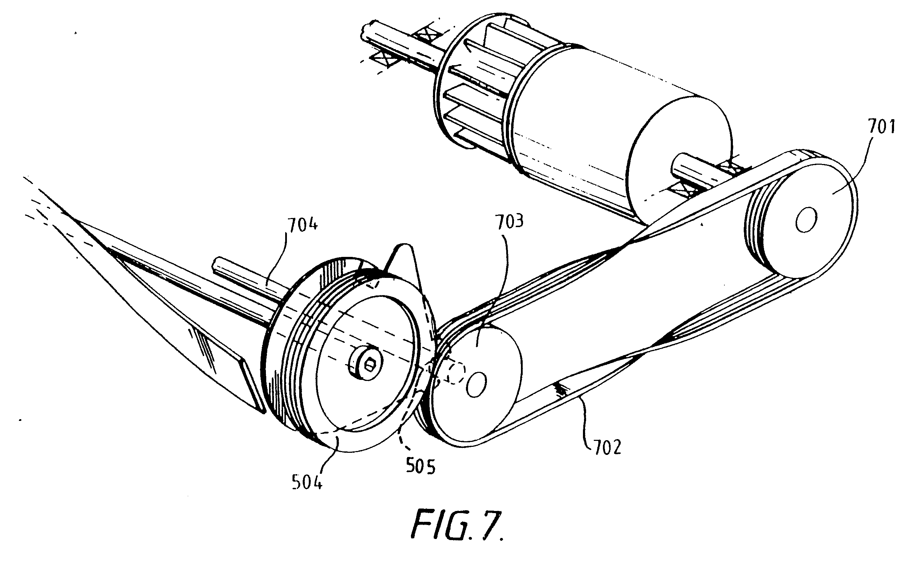

Figure 7 shows diagrammatically the principle of operation of the drive mechanism. As already mentioned in connection with Figure 2, the motor shaft carries at its outer end a pulley wheel shown in Figure 7 at 701. This wheel has a grooved outer surface to mate with the ribbed surface of a drive belt 702. The belt 702 is of the poly-V type, having a pattern of friction-increasing ridges on its inner surface, and being flat on the outer surface.

The belt 702 passes over an idler wheel 703 mounted on an idler shaft 704. This wheel has a smooth outer surface.

Between the wheels 701 and 703 the belt 702 undergoes a twist of 180° in both its forward and return portions, so that where it passes over the idler wheel 703 the flat side is in contact with the wheel and the ribbed surface faces outwards.

When the cutter assembly is inserted into the aperture 201 of the body, its drive pulley 504 bears against the ribbed outer surface of the belt. The forked projections 505,506 engage the shaft 704 and ensure that as the cutter assembly is raised or lowered it moves in a path centred on the axle of the pulley 701, so that the drive pulley 504 remains in contact with the ribbed surface of the belt as it passes over the idler 703.

In a modification, in order to reduce power loss and minimise wear, the idler wheel 703 is mounted on a short axle journalled in bearings, and the forks engage a rod or a pair of pins coaxial with the shaft 704.

This means of transmitting power to the cutters is the subject of our Patent Application No. 89.14323.4.

In operation of the mower the turbo fan produces considerable suction in the grass box, and consequently at the region where cutting is taking place. This helps to hold the grass immediately in front of the cutters upright, so that it is more readily engaged by the fixed blade of the cutters, and it also removes the cut grass from the region of the cutters, so that it does not tend to clog the cutters or add unnecessarily to the load on them by falling back and being cut a second or third time. The grass borne in the airstream into the grass box is deposited there, where the velocity is slowed by the increased cross section offered to the airstream, entering the grass box after which the air passes through the turbo fan and is ejected within the skirt under the mower, assisting to support it, and so reducing the load on the land wheels and roller, and easing the progress of the mower so that it has less tendency to dig in, but to lift and skim over the uncut grass.

It will be appreciated that, since the cutter assembly is completely removable it may be replaced by alternative equipment, for example a fertilizer distributor, a scarifier, a lawn rake, a brush for gathering fallen leaves, or removed altogether to create a vacuum refuse collector or any other device suitable for treating the surface of a lawn or path. Power for the alternative equipment, if any is required, may be supplied by a drive wheel engaging the belt in the same manner as described for the cutter mechanism of the mower.

## Claims

1. A cylinder mower comprising a mower body, a removable cutter assembly and means for adjusting the position of the assembly in relation to the body by tilting about the axis of a drive wheel mounted in the body to enable the cutting height to be varied, and means for supplying power to the cutting assembly.

2. A mower according to claim 1 in which the cutter assembly is mounted within the mower body by means including at least one fork on the assembly engaging the drive wheel axis or a pin, rod or tube coaxial with the drive wheel axis.

3. A mower according to claim in claim 2 in which the body is supported in operation by means lying wholly behind the cutter assembly.

4. A mower according to claim 3 in which the support means includes a rear roller and a pair of front wheels or rollers, the front wheels or rollers lying within the width of the cutter assembly.

5. A mower according to any preceding claim in which a grass box closes the top of the body, and the body includes fan means for applying suction to the grass box to draw grass cuttings into the grass box.

6. A mower according to claim 5 in which the motor which drives the fan also supplies power to the cutter assembly.

7. A mower according to claim 5 or claim 6 in which the underside of the body includes a skirt, and air is discharged from the fan means within the skirt to assist in supporting the mower from the ground.

8. A mower according to any preceding claim in combination with a treatment unit exchangeable for the cutter assembly.

9. A mower according to claim 8 in which the treatment unit is a fertilizer distributor, a lawn scarifier, or a sweeper.

FIG.1.

FIG.2.

FIG.3.

FIG.4.

FIG.5.

EP 0 405 794 A2

FIG.6.

EP 0 405 794 A2

FIG.7.

11

601    502

505

# FIG. 8.